# EUROPEAN PATENT APPLICATION

(11) **EP 0 694 271 A1**
(43) Date of publication of application: **31.01.1996**
(21) Application number: 95303455.0
(22) Date of filing: 23.05.1995
(51) Int. Cl.: A47B 96/18, A47B 95/04

(54) **Work surfaces**

(30) Priority: 20.07.1994 GB 9414649
(71) Applicant: Orama Fabrications Ltd, Somercotes, Derbyshire DE55 4RF (GB)
(72) Inventor: Riley, Derek, c/o Orama Fabrications Ltd., Somercotes, Derbyshire DE55 4RF (GB)
(74) Representative: Singleton, Jeffrey

(57) **Abstract**

An end piece (6) for a work surface (1) having a postformed edge (4), the end piece (6) comprising a length of matching work surface postformed on a first edge (7) and on a second edge (8) adjacent the first edge, and having an inclined postformed edge (9) spanning said first and second edges (7,8), the inclined edge being provided by a postformed fillet (11) inserted into the end piece at the corner between the two postformed edges (7,8). There is also disclosed a method of manufacturing an end piece for a worktop

## Description

This invention relates to work surfaces.

The invention will be discussed primarily in relation to kitchen worktops for convenience but it is to be understood that the invention is much more broadly applicable to work surfaces in general for domestic or industrial use. For example, the invention is applicable to work surfaces in bathrooms, cloakrooms and utility rooms.

Kitchen worktops have for some years now been produced in standard lengths for cutting to size and with the front edge postformed to provide a curvilinear edge devoid of sharp corners and aesthetically pleasing. These worktops are typically constructed of a chipboard core with at least a top covering of synthetic plastics laminate.

In the case of open-ended worktops, i.e. where one of both ends do not butt against an adjoining unit, it is known to clad the cut end(s) of the worktop with a strip of matching laminate but this is unsatisfactory for the following reasons :-
1. There is a change of edge from postformed (front edge) to the square cut end which is not aesthetically pleasing.
2. There is a relatively sharp corner between the postformed front edge and square cut end which could be a safety hazard.
3. The adherence of the matching strip of laminate to the cut end is often suspect with attendant peeling and/or dirt trap problems.
4. The problem of Item 2 above has been addressed by also cutting off the front corner of the worktop at the or each open end but this exacerbates the aesthetic problem (Item 1 above) and the adherence problem (Item 3 above) because the laminate strip now has to go round two edges.

It is also known to produce specially fabricated worktops to a given size with the postforming running round the exposed end(s). This can be achieved either by fabricating the whole worktop or by supplying a strip of postforming in the same way as other edging materials, these strips being of timber or synthetic plastics, for example. However, this is a very expensive process and is thus little used except on one-off occasions. The present invention seeks to produce this all round postforming effect in a manner which is relatively inexpensive.

According to one aspect of the present invention there is provided an end piece for a work surface having a postformed edge, the end piece comprising a length of matching work surface postformed on a first edge and on a second edge adjacent the first edge, and having an inclined postformed edge spanning said first and second edges, the inclined edge being provided by a postformed fillet inserted into the end piece at the corner between the two postformed edges.

The end piece can be bolted or otherwise secured to the end of a work surface which has been cut to the appropriate length.

The advantage of the invention is that a fully postformed and 'shaped' end to a work surface can be provided in a simple but relatively inexpensive manner which constitutes a significant advance in the art.

If the work surface is of the peninsular type with two opposed postformed edges, the end piece may be provided with an additional inclined postformed edge spanning the second edge and an edge generally opposed to the first edge, which edge is also postformed, the additional inclined edge also being provided by a postformed fillet inserted into the end piece at the corner between two adjacent postformed edges.

The fillet associated with the or each inclined edge may be generally trapezoidal in shape and may be secured in a correspondingly shaped recess in the end piece by adhesive which is colour coded with the end piece so as to minimise, if not obscure, the presence of the fillet.

According to another aspect of the invention, there is provided a method of manufacturing an end piece for a work surface comprising the steps of :-
1. postforming a piece of work-surface-matching material on two adjacent edges;
2. forming a recess at the corner between the two postformed edges;
3. fitting a postformed fillet in said recess to provide an inclined edge to the end piece, which inclined edge spans the two postformed edges.

An end piece for a work surface in accordance with the present invention will now be described in greater detail, by way of example, with reference to the accompanying drawings, in which :-
Figure 1 is a perspective view of the end of the work surface to which the end piece is to be fitted;
Figure 2 is a perspective underside view of the end piece adjacent, but not yet fitted to, the work surface;
Figure 3 is a plan view of Figure 2 but showing, in addition, fastening means;
Figure 4 is a section through the work surface and end piece when fitted together;
Figure 5 is a partial plan view from above of the end piece without the fillet;
Figure 6 is a partial plan view from above of the end piece with the fillet fitted;
Figure 7 is a perspective view of the end piece with fitted fillet: and
Figure 8 is a perspective view of an end piece with two fitted fillets.

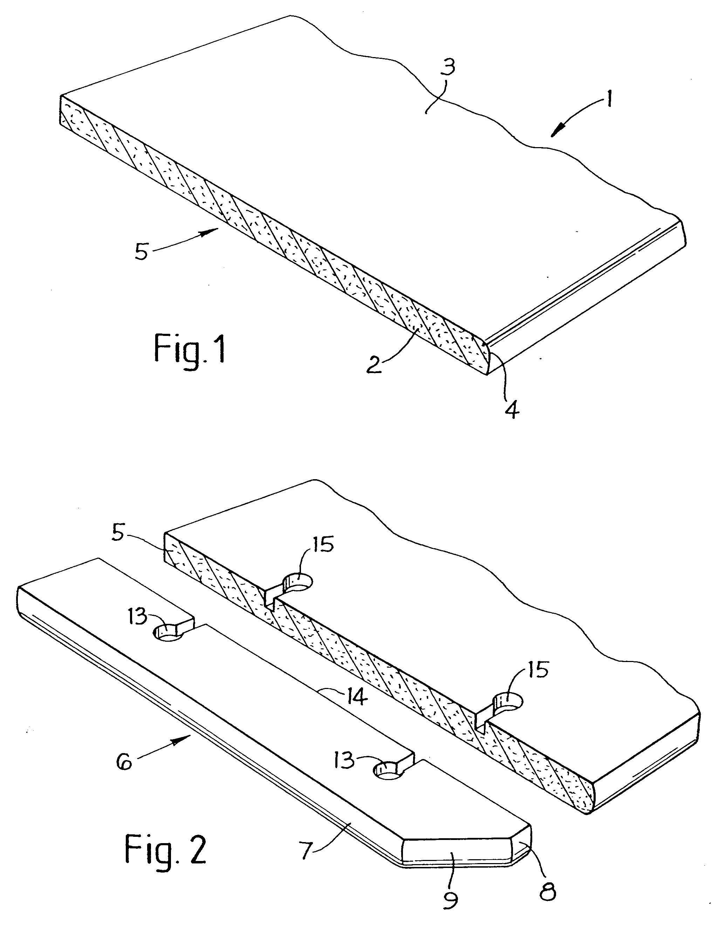

Referring to the drawings, the end piece is for a worktop, such as a kitchen worktop for example, and the worktop is indicated at 1 in Figure 1. The worktop is of typical construction, namely a chipboard core 2 with a laminated synthetic plastics covering 3. Also, as is typical, the front edge of the worktop 1 is postformed as indicated at 4, in other words the front edge of the worktop is curved in order to eliminate the otherwise sharp corner at the transition between the main surface of the worktop and the front edge. The laminated synthetic plastics covering material extends over the postformed edge 4.

The worktop 1 is normally made in a number of different lengths, is ordered oversize by a fitter, and cut to the required length. In circumstances where the worktop is to fit between two units, then there is no need to treat the cut edge 5 of the worktop, at either end, because each cut is obscured by the unit against which it abuts. However, it is sometimes the case that an edging strip is adhered to the cut edge 5, the edging strip being of the same laminated synthetic plastics material as the covering to the worktop. In a case where the or each end of the worktop 1 is open, i.e. does not abut against an adjoining unit, then the cut edge has to be finished. Prior to the present invention, the finishing was effected by adhering a strip of laminated synthetic plastics material to the cut end, as already mentioned above. The problem with this, as already explained, is that the strip can become loose and in any event, there tends to be cavities created which are dirt-collecting which is undesirable.

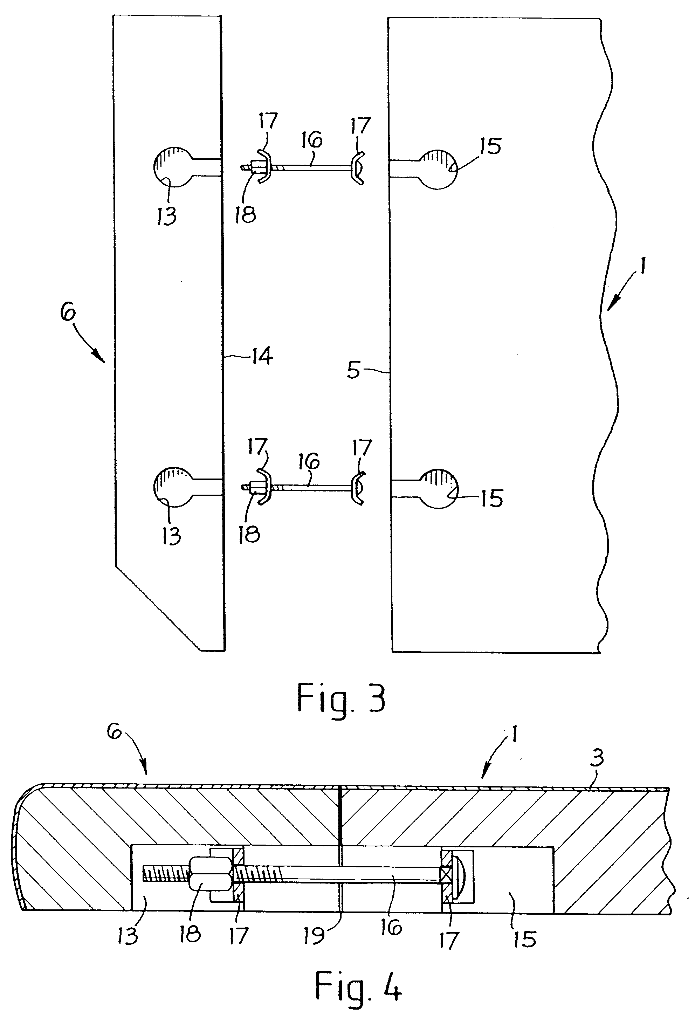

According to the present invention, an end piece 6 is provided, this being illustrated in Figures 2 to 7. The end piece 6 matches the worktop 1 as regards its basic construction and front to rear dimensions and thickness, and is covered with a matching laminated synthetic plastics material. However, the end piece 6 is provided with a first postformed edge 7 and a second postformed edge 8 adjacent the first edge, and an inclined postformed edge 9 which spans the postformed edges 7 and 8.

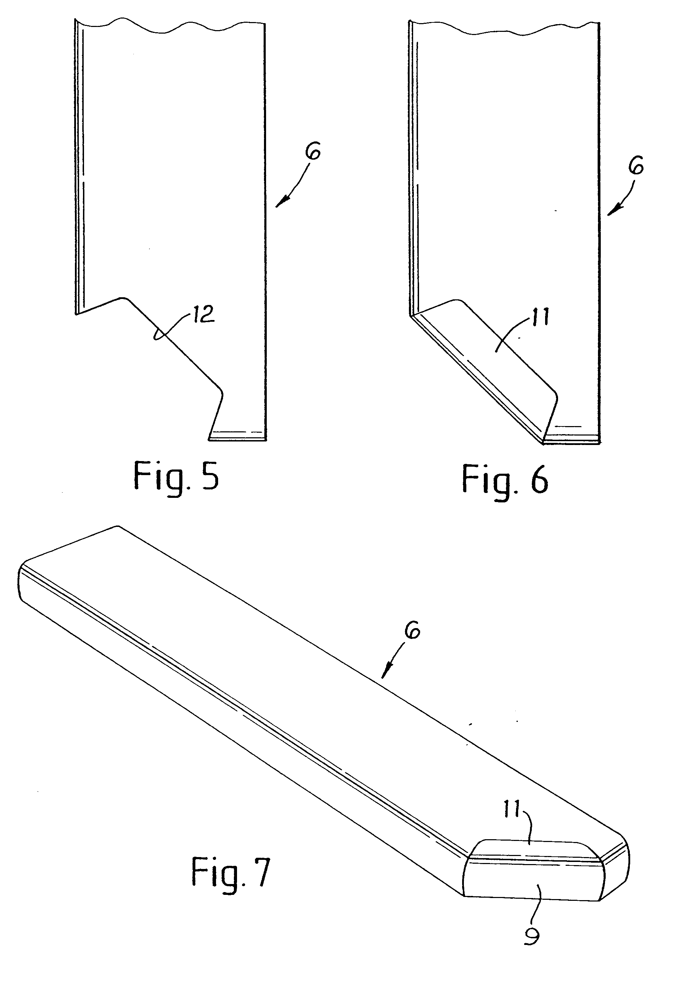

As best illustrated in Figures 5,6 and 7, the inclined postformed edge 9 is provided by a postformed fillet 11 which is of trapezoidal shape and is received within a correspondingly shaped recess 12 in the end piece 6. It will be appreciated that the fillet 11 is of the same basic construction as the body of the end piece 6, and hence as the worktop 1. Again, the fillet 11 has a matching laminated synthetic plastics material applied to its top and front edge. The fillet 11 is secured within the recess 12 by an adhesive which is preferably colour coded to the laminated synthetic plastics material in order to minimise, if not obscure, the join between the two elements.

The end piece 6 is provided on the underside with two keyhole shaped apertures 13 which extend from the edge 14 of the end piece opposite to the postformed edge 7.

In order to utilise the end piece 6 in accordance with the present invention, the fitter needs to cut the worktop 1 to the required length which is the desired overall length, less the width of the end piece. The fitter then has to provide two further keyhole shaped apertures 15 in the underside of the worktop 1 at, and extending from, the cut edge 5, having first marked the required positions of these holes by placing the end piece 6 in the required position against the worktop edge 5.

In order to fit the end piece 6 to the worktop 1, adhesive 19 is applied to one or both of the mating surfaces of the worktop 1 and end piece 6, again the adhesive preferably being colour coded to the laminated synthetic plastics material. The two elements are placed together with the respective sets of holes 13 and 15 in alignment. Bolts 16 fitted with a pair of opposed generally U-shaped members 17 are then placed in the aligned holes with the head of bolt and associated U-shaped member 17 being received in the larger portion of the keyhole 15 and the nut 18 associated with the bolt, together with the other U-shaped member 17, received in the larger portion of the aligned keyhole 13. It will be understood that the bolt can be placed so that the head lies in either the keyhole 13 of the end piece 6 or the keyhole 15 of the worktop 1. The two elements 1 and 7 are then drawn together by tightening the bolts 16 and the adhesive allowed to cure. The use of keyhole apertures and bolts is standard practice for joining two work surfaces together.

It will be seen that it is a relatively simple matter to fit an end piece 6 in accordance with the present invention to a worktop or work surface and that the finished product is much improved over the former product in which the cut end of the worktop is fitted with a strip of matching laminated synthetic plastics material which can come adrift and which in any case, leaves a relatively sharp upper edge to the end of the worktop. Furthermore, the end of the worktop is fully postformed with the use of the end piece in accordance with the present invention.

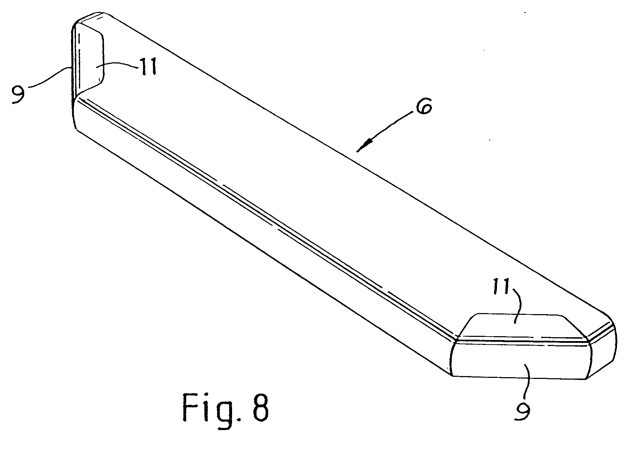

It will also be appreciated that if the worktop is of the peninsular type in which both the front and rear edges are postformed, it is desired to have a second inclined edge at the "rear" of the worktop. The end piece 6 can be supplied with such an edge, again that edge comprising a fillet similar to the fillet 11 as illustrated in Figure 8. It will be further appreciated that if the worktop is open at each end, then an end piece 6 can be fitted at each end with one or two inclined edges, as appropriate.

The end pieces 6 are supplied as right or left-hand units, complete with fixing bolts 16 and colour coded adhesive.

The end piece 6 is manufactured from a length of material similar to that from which the worktop is provided and is postformed along one of its longer edges using a single pass through a postforming machine. The piece of material then has to be passed through the postforming machine once again having been turned through right angles in order to postform one end of the material. The material is then square cut to the required width of the end piece 6 and the remaining stock of material again passed through the postforming machine to postform the now cut end of the stock and so on until the stock is used up in forming a plurality of end pieces. At this stage, each end piece is a rectangular piece of material with postformed adjacent edges. The next step is to cut the recess 12 at the corner of the two postformed edges and to fit within it the fillet 11. The fillet 11 is produced from a matching length of postformed material.

## Claims

1. An end piece (6) for a work surface (1) having a postformed edge (4), the end piece comprising a length of matching work surface postformed on a first edge (7) and on a second edge (8) adjacent the first edge (7), and having an inclined postformed edge (9) spanning said first and second edges (7,8), the inclined edge (9) being provided by a postformed fillet (11) inserted into the end piece at the corner between the first and second postformed edges (7,8).

2. An end piece may according to claim 1 and having an additional inclined postformed edge (9) spanning the second edge and an edge generally opposed to the first edge, which edge is also postformed, the additional inclined edge also being provided by a postformed fillet (11) inserted into the end piece at the corner between the second edge and said opposed edge.

3. An end piece according to claim 1 or 2, wherein the or each fillet (11) is generally trapezoidal in shape and is secured in a correspondingly shaped recess (12) in the end piece (6).

4. An end piece according to claim 3, wherein the or each fillet (11) is secured in the associated recess with adhesive which is colour coded with the end piece (6) so as to minimise, if not obscure, the presence of the fillet.

5. A method of manufacturing an end piece for a work surface (1) comprising the steps of :-
1. postforming a piece of work-surface-matching material on two adjacent edges (7,8);
2. forming a recess (12) at the corner between the two postformed edges (7,8);
3. fitting a postformed fillet (11) in said recess (12) to provide an inclined edge (9) to the end piece (6), which inclined edge (9) spans the two postformed edges (7,8).

6. A method according to claim 5 including the further steps of :-
1. postforming an additional edge of the material adjacent one of the other postformed edges;
2. forming an additional recess (12) at the corner between the additional postformed edge and the adjacent other postformed edge; and
3. fitting a postformed fillet (11) in the additional recess to provide an additional inclined edge to the end piece, which additional inclined edge spans the additional postformed edge and the adjacent other postformed edge.

7. A method of manufacturing a work surface with a postformed end comprising the steps of:
1. cutting a piece of work surface (1) to the required length less the width of an end piece;
2. forming an end piece (6) in accordance with claim 5 or 6; and
3. attaching the end piece (6) to the appropriate end of the work surface.

8. A method according to claim 7 and including the further step of;
1. attaching an end piece (6) formed in accordance with claim 5 or 6 to each end of the work surface.
